# EUROPÄISCHE PATENTANMELDUNG

(11) **EP 1 701 230 A1**
(43) Veröffentlichungstag der Anmeldung: **13.09.2006**
(21) Anmeldenummer: 05005280.2
(22) Anmeldetag: 10.03.2005
(51) Int. Cl.: G05B 19/05

(54) **Diagnose parallel geschalteter, redundanter Signalausgabekanäle**

(71) Anmelder: SIEMENS AKTIENGESELLSCHAFT, 80333 München (DE)
(72) Erfinder: Brousek, Norbert, 90766 Fürth (DE)

(57) **Zusammenfassung**

Die Erfindung betrifft eine Vorrichtung und ein Verfahren zur Drahtbruchprüfung bei einer redundanten Ausgabe eines Signals. Um eine möglichst ausfallsichere Ausgabe insbesondere eines digitalen Signals bei gleichzeitiger Bereitstellung einer Diagnosefunktion zu gewährleisten, wird vorgeschlagen, zwei Digitalausgabebaugruppen insbesondere mit in jedem Kanal integrierter Diode parallel zu schalten. Die Diagnosefunktion wird durch einen Treiber ermöglicht, der bei einem Sollwert für das digitale Signal von logisch "1", den Kanal mit einer logischen "1" beschaltet, während er einen hierzu parallel geschalteten Kanal kurzfristig auf logisch "0" setzt und zeitgleich eine Unterbrechungsprüfung des mit logisch "1" beschalteten Kanals durchführt.

## Beschreibung

Die Erfindung betrifft eine Verarbeitungseinheit, ein Automatisierungsgerät und ein Verfahren zur Durchführung einer Unterbrechungsprüfung an redundanten parallel geschalteten Ausgabekanälen zur Ausgabe elektrischer Signale.

Die Erfindung kommt zum Beispiel im Bereich der Automatisierungstechnik zur Steuerung kontinuierlicher Prozesse, insbesondere in der chemischen, prozesstechnischen oder pharmazeutischen Industrie, zum Einsatz. Um die Anlagenverfügbarkeit zu erhöhen wird hierbei einer Ausgabebaugruppe, die beispielsweise zur Ausgabe eines elektrischen Signals zur Ansteuerung eines Aktors vorgesehen ist, eine zweite redundante Baugruppe parallel geschaltet. Fällt die eine Baugruppe aus, so kann das Ausgangssignal immer noch von der zweiten Baugruppe zur Verfügung gestellt werden.

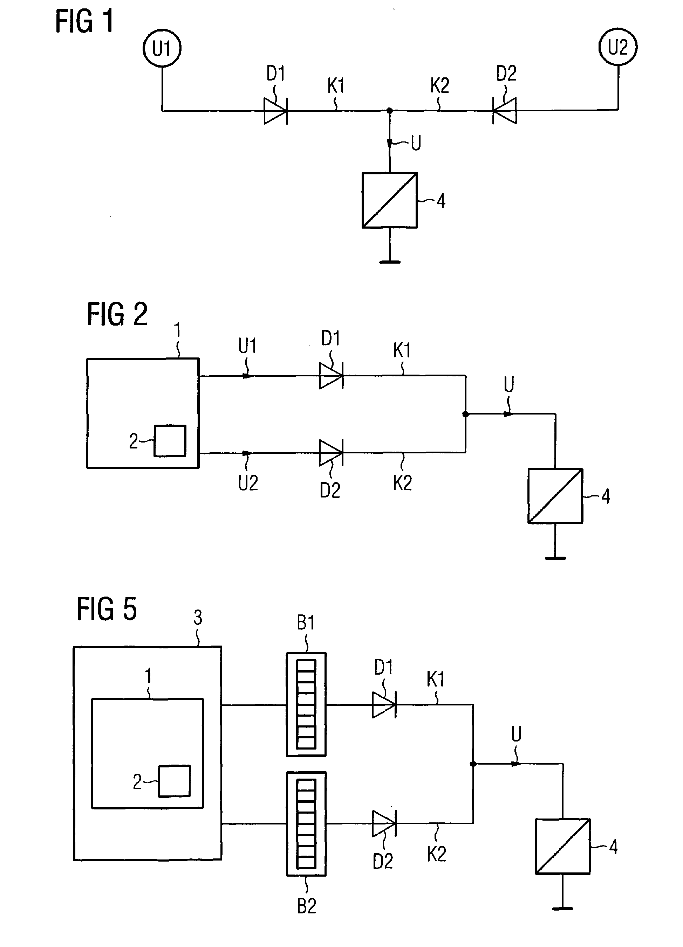

Aus dem Handbuch "SIMATIC - Automatisierungssystem S7-400H - Hochverfügbare System", Ausgabe 01/2004 ist die Parallelschaltung redundanter Digitalausgabebaugruppen zur Erhöhung einer Anlagenverfügbarkeit bekannt. Ein digitales Ausgangssignal wird hier von zwei ausgangsseitig parallel geschalteten Baugruppen bereitgestellt, so dass bei Ausfall einer Baugruppe das Signal immer noch zur Verfügung steht. In den parallel geschalteten Baugruppen ist je Kanal eine Diode integriert, die eine gegenseitige Beeinflussung der Baugruppen verhindert (s. FIG 1). Ebenfalls bekannt sind aus diesem Handbuch Baugruppen mit einer Diagnosefunktion zur Erkennung eines Drahtbruchs.

Der Erfindung liegt die Aufgabe zu Grunde, eine Ausgabe elektrischer Signale durch redundante Ausgabemittel in Kombination mit einer zuverlässigen Diagnose der Ausgabemittel zu ermöglichen.

Diese Aufgabe wird gelöst durch eine Verarbeitungseinrichtung zur Durchführung einer Unterbrechungsprüfung für mindestens einen ersten und einen zweiten Kanal zur Bereitstellung elektrischer Signale, wobei der zweite Kanal zu dem ersten redundant und parallel geschaltet ist und wobei die Verarbeitungseinrichtung einen Treiber zur Vorgabe der Signale aufweist, wobei der Treiber zur kurzeitigen Vorgabe eines ersten Signals für den ersten Kanal vorgesehen ist, durch das der erste Kanal gezielt in einen stromlosen Zustand versetzt wird, und die Verarbeitungseinrichtung zur Durchführung der Unterbrechungsprüfung des zweiten Kanals während des stromlosen Zustandes des ersten Kanals vorgesehen ist.

Diese Aufgabe wird weiterhin durch ein Automatisierungsgerät mit einer derartigen Verarbeitungseinrichtung gelöst.

Ferner wird die Aufgabe gelöst durch ein Verfahren zur Durchführung einer Unterbrechungsprüfung für mindestens einen ersten und einen zweiten Kanal zur Bereitstellung elektrischer Signale, wobei der zweite Kanal zu dem ersten redundant und parallel geschaltet ist und wobei mit einem Treiber die elektrischen Signale vorgegeben werden, wobei mit dem Treiber kurzeitig ein erstes Signal für den ersten Kanal vorgegeben wird, durch das der erste Kanal gezielt in einen stromlosen Zustand versetzt wird, und mit einer Verarbeitungseinrichtung die Unterbrechungsprüfung des zweiten Kanals während des stromlosen Zustandes des ersten Kanals durchgeführt wird.

Ziel der Parallelschaltung zweier Kanäle zur Bereitstellung eines Ausgangssignals ist die Erhöhung der Anlagenverfügbarkeit. Beide Kanäle stellen das gleiche Ausgangssignal zur Verfügung, so dass bei Auswahl eines Kanals das entsprechende Ausgangssignal immer noch von dem zweiten redundanten Kanal bereitgestellt werden kann.

Der Erfindung liegt die Erkenntnis zugrunde, dass in der Praxis insbesondere durch Bauteiltoleranzen eine ungleiche Belastung der Kanäle entsteht. So kann es z.B. vorkommen, dass obwohl beide Kanäle das gleiche Ausgangssignal zur Verfügung stellen sollen, nur ein Kanal einen Stromfluss führt. Hierdurch kann fälschlicherweise für den Kanal, der keinen Strom führt, ein Drahtbruch detektiert werden. Um trotz dieser Problematik eine zuverlässige Unterbrechungsprüfung gewährleisten zu können, wird erfindungsgemäß der erste Kanal stromlos geschaltet, während der zweite Kanal auf einen möglichen Drahtbruch überprüft wird. Aufgrund des stromlosen Zustandes des ersten Kanals ist sichergestellt, dass der zweite Kanal einen Strom führen muss, wenn keine Unterbrechung in dem zweiten Kanal vorliegt.

In einer besonders vorteilhaften Ausführungsform der Verarbeitungsvorrichtung ist der Treiber zur Vorgabe digitaler Logiksignale vorgesehen. In einem solchen Fall gestaltet sich die erfindungsgemäße Unterbrechungsprüfung besonders einfach. Zweckmäßigerweise ist hierbei die Verarbeitungseinheit zur Durchführung der Unterbrechungsprüfung vorgesehen, während ein am Ausgang der parallel geschalteten Kanäle anliegendes Ausgangssignal von einem Anwendungsprogramm auf logisch "1" gesetzt ist.

Bei der Parallelschaltung digitaler Ausgabekanäle weisen der erste und zweite Kanal vorteilhafterweise jeweils mindestens ein elektrisches Ventil, insbesondere eine Diode, auf, die zur Entkopplung der Kanäle vorgesehen sind.

Wenn in einem solchen Fall das Anwendungsprogramm die Ausgabe einer logischen "1" vorsieht, kann der kleinste Unterschied in den Bauteilparametern der Dioden oder deren Einbauort dafür sorgen, dass nur einer der Kanäle einen Stromfluss führt.

Dies kann ohne eine Ausführung der Erfindung dazu führen, dass der stromlose Kanal fälschlicherweise einen Drahtbruch meldet. Sobald jedoch der stromführende Kanal gezielt stromlos geschaltet wird, kommutiert der Strom automatisch auf den zuvor stromlosen Kanal um. Der zuvor stromlose Kanal kann nun hinsichtlich einer möglichen Unterbrechung überprüft werden.

Das gezielte Stromlosschalten eines Kanals zur Durchführung der Unterbrechungsprüfung kann im Falle digitaler Ausgangssignale besonders einfach durchgeführt werden, in dem der Treiber zur Generierung des ersten Signals durch Inversion des zweiten Signals für den zweiten Kanal während der Unterbrechungsprüfung vorgesehen ist. Sofern das Ausgangssignal auf logisch "1" gesetzt werden soll, werden im Betrieb außerhalb der Dauer der Unterbrechungsprüfung sowohl das erste als auch das zweite Signal auf logisch "1" gesetzt. Soll nun für den zweiten Kanal eine Unterbrechungsprüfung durchgeführt werden, so wird das erste Signal invertiert, d.h. auf logisch "0" gesetzt, so dass der erste Kanal gezielt stromlos geschaltet wird. Hierdurch ist sichergestellt dass der zweite Kanal garantiert einen Stromfluss führt und somit eine zuverlässige Unterbrechungsprüfung des Kanals durchgeführt werden kann.

Die Unterbrechungsprüfung kann auf zweierlei Arten eingeleitet werden. In einer ersten Alternative ist die Verarbeitungseinheit zur Unterbrechungsprüfung des zweiten Kanals zu Beginn einer Flanke vorgesehen, in der das Ausgangssignal vom Anwendungsprogramm auf logisch "1" gesetzt wird. Sobald das Anwendungsprogramm den Ausgang von logisch "0" auf logisch "1" setzen will, wird zunächst nur das zweite Signal des zweiten Kanals auf logisch "1" gesetzt. Hierdurch ist sichergestellt, dass zu Beginn der Flanke der erste Kanal stromlos ist und somit der zweite Kanal den kompletten Strom führen muss. Innerhalb eines kurzen Zeitfensters kann nun der zweite Kanal auf eine mögliche Unterbrechung überprüft werden. Nach Ablauf dieses Zeitfensters wird auch das erste Signal des ersten Kanals auf logisch "1" geschaltet, so dass beide Kanäle redundant das Aufgabesignal zur Verfügung stellen.

In einer alternativen Ausführungsform hierzu ist die Verarbeitungseinheit zur Unterbrechungsführung des zweiten Kanals vorgesehen, nachdem das Ausgangssignal vom Anwendungsprogramm und das erste und zweite Signal vom Treiber auf logisch "1" gesetzt sind. In diesem Fall werden zunächst sowohl das erste als auch das zweite Signal auf logisch "1" gesetzt, sobald das Anwendungsprogramm ein entsprechendes Kommando vorgibt. Nach einer bestimmten Zeit wird das erste Signal des ersten Kanals kurzzeitig auf logisch "0" gesetzt, um sicherzustellen, dass der erste Kanal für eine kurze Zeit stromlos ist und der komplette Strom über den zweiten Kanal fließen muss. Es wird eine Unterbrechungsprüfung des zweiten Kanals durchgeführt und, sofern keine Unterbrechung festgestellt wurde, der erste Kanal wieder mit einer logischen "1" beaufschlagt.

Nach einer gewissen Wartezeit wird vorteilhafterweise der zweite Kanal auf logisch "0" gesetzt um diesen stromlos zuschalten und eine Unterbrechungsprüfung im ersten Kanal durchzuführen. D.h., dass die Verarbeitungseinrichtung zur Unterbrechungsprüfung beider Kanäle während eines Pulses vorgesehen ist, bei dem das Ausgangssignal vom Anwendungsprogramm auf logisch "1" gesetzt ist. Während einer logischen "1" am Ausgang der Parallelschaltung findet also eine Art Togglevorgang statt, bei dem zunächst der erste Kanal und anschließend der zweite Kanal hinsichtlich eines Drahtbruchs überprüft werden.

Insbesondere in der Automatisierungstechnik ist eine besonders vorteilhafte Anwendung der Verarbeitungseinheit darin zu sehen, dass die Verarbeitungseinheit Teil einer Speicherprogrammierbaren Steuerung ist. Beispielsweise handelt es sich bei der Verarbeitungseinheit um eine CPU, mit der ein Anwendungsprogramm durchgeführt wird. Innerhalb des Anwendungsprogramms können Werte für ein Ausgangssignal vorgegeben werden.

Diese Werte dienen beispielsweise zur Ansteuerung eines Aktors.

Vorteilhafterweise ist der Treiber als Softwaretreiber ausgeführt, der Bestandteil des Anwendungsprogramms ist. Alternativ kann der Treiber auch als Softwaretreiber ausgeführt sein, der als Firmware in einem Speicherbereich der Verarbeitungseinheit gespeichert ist.

Eine vorteilhafte Ausführungsform eines Automatisierungsgerätes mit einer Ausführungsform der beschriebenen Verarbeitungseinrichtung umfasst eine erste Baugruppe, die den ersten Kanal aufweist, und eine zweite Baugruppe, die den zweiten Kanal aufweist. Typischerweise handelt es sich bei dem Automatisierungsgerät um eine Speicherprogrammierbare Steuerung, mit der eine erste und eine zweite Baugruppe gekoppelt werden kann. Zur Erhöhung der Anlagenverfügbarkeit wird die erste Baugruppe mit der zweiten Baugruppe parallel geschaltet.

Insbesondere im Falle digitaler Ausgabebaugruppen sind die erste Diode in der ersten Baugruppe und die zweite Diode in der zweiten Baugruppe in einer vorteilhaften Ausführungsform integriert.

Im Folgenden wird die Erfindung anhand der in den Figuren dargestellten Ausführungsbeispiele näher beschrieben und erläutert. Es zeigen:
- FIG 1: eine Parallelschaltung zweier Digitalausgabebaugruppen,
- FIG 2: eine Parallelschaltung zweier Digitalausgabebaugruppen mit einer Verarbeitungseinheit zur Durchführung einer Unterbrechungsprüfung,
- FIG 3: Signalverläufe einer ersten Ausführungsform eines Verfahrens zur Durchführung einer Unterbrechungsprüfung,
- FIG 4: Signalverläufe einer zweiten Ausführungsform eines Verfahrens zur Durchführung einer Unterbrechungsprüfung und
- FIG 5: ein Automatisierungsgerät mit einer Verarbeitungseinheit zur Durchführung einer Unterbrechungsprüfung

FIG 1 zeigt eine Parallelschaltung zweier Digitalausgabebaugruppen, wie sie gemäß dem Stand der Technik zur Erhöhung einer Anlagenverfügbarkeit bekannt ist. Ein Aktor 4 wird über ein digitales Ausgangssignal U gesteuert. Um die Verfügbarkeit des digitalen Ausgangssignals U zu erhöhen, werden eine erste und eine zweite Baugruppe parallel geschaltet.

Von der ersten Baugruppe wird über einen ersten Kanal K1 ein erstes Signal U1 zur Verfügung gestellt und von der zweiten Baugruppe auf einem zweiten Kanal K2 ein zweites Signal U2. Beide Kanäle werden von einer Verarbeitungseinrichtung derart gesteuert, dass sie das gewünschte Ausgangssignal U, zur Verfügung stellen. Sollte eine der Baugruppen ausfallen, kann das Signal also auch immer noch von der redundanten Baugruppe zur Verfügung gestellt werden, so dass der Aktor 4 nach wie vor korrekt betrieben werden kann.

Um die beiden Kanäle K1,K2 voneinander zu entkoppeln, ist in dem ersten Kanal K1 eine erste Diode D1 integriert und in dem zweiten Kanal K2 eine zweite Diode D2. Hierdurch wird vermieden, dass eine Baugruppe die andere Baugruppe speist, wenn ein Kanal vor dem anderen Kanal schaltet.

In der Praxis sind die beiden Dioden D1,D2 nicht vollständig identisch. Dies hat zur Folge, dass bei einem Ausgangssignal U von logisch "1" u.U. nur einer der beiden Kanäle K1,K2 einen Strom führt. Hierdurch kann fälschlicherweise an dem stromlosen Kanal ein Drahtbruch detektiert werden, der in Wirklichkeit nicht existiert. Dies führt zu unerwünschten und unberechtigten Fehlermeldungen.

FIG 2 zeigt eine Parallelschaltung zweier digitaler Ausgabebaugruppen mit einer Verarbeitungseinheit 1 zur Durchführung einer Unterbrechungsprüfung. Wie schon in FIG 1 gezeigt, ist ein erster Kanal K1 einer ersten digitalen Ausgabebaugruppe mit einer ersten integrierten Diode D1 parallel zu einem zweiten Kanal K2 einer zweiten digitalen Ausgabebaugruppe mit einer zweiten integrierten Diode D2 geschaltet.

Auf der Verarbeitungseinheit befindet sich ein Treiber 2, mit dem für den ersten Kanal K1 ein erstes Signal U1 bereitgestellt wird und für den zweiten Kanal K2 ein zweites Signal U2. Die beiden digitalen Ausgabebaugruppen bzw. der erste und der zweite Kanal K1,K2 dienen zur redundanten Bereitstellung eines Ausgangssignals U, über das ein Aktor 4 angesteuert wird. Sofern keine Unterbrechungsprüfung stattfindet, entsprechen die von dem Treiber 2 vorgegebenen Werte für das erste Signal U1 und für das zweite Signal U2 dem gewünschten Ausgangssignal U.

Für den Fall einer Unterbrechungsprüfung schaltet der Treiber 2 kurzzeitig einen der Kanäle K1,K2 stromlos. Die Unterbrechungsprüfung geschieht, während eine logische "1" als Ausgangssignal U der Parallelschaltung anliegt. In diesem Fall wird kurzzeitig eine der beiden Kanäle K1,K2 auf logisch "0" geschaltet, während der andere hinsichtlich einer Unterbrechung bzw. eines Drahtbruchs überprüft wird. Auf diese Art und Weise ist sichergestellt, dass der zu überprüfende Kanal auf jeden Fall Strom führt, sofern er sich im ordnungsgemäßen Zustand befindet.

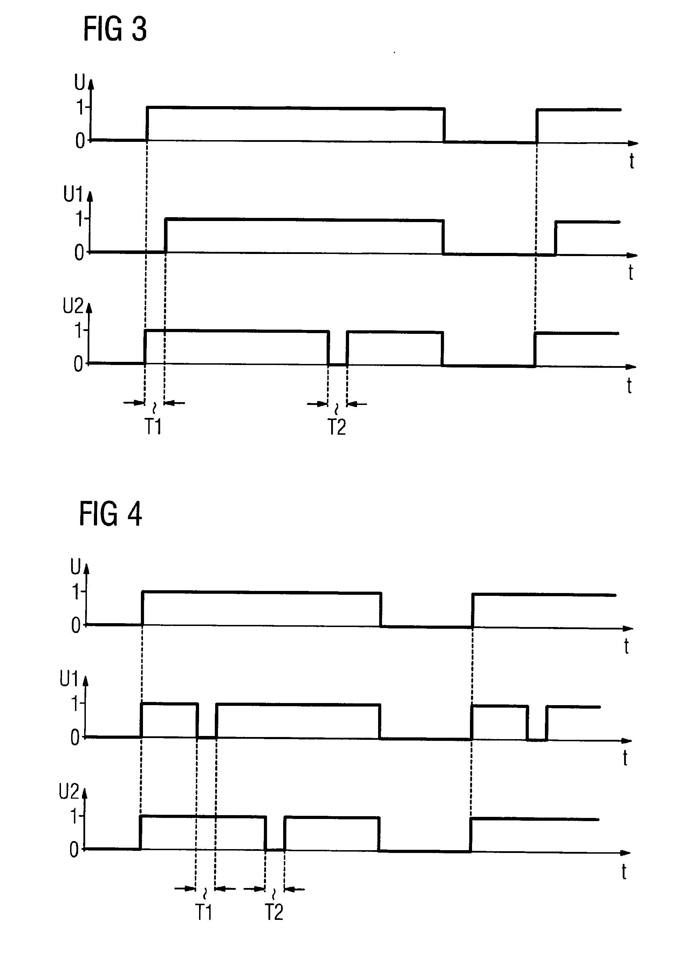

FIG 3 zeigt Signalverläufe einer ersten Ausführungsform eines Verfahrens zur Durchführung einer Unterbrechungsprüfung. Die verwendeten Bezugszeichen entsprechen den bereits in FIG 2 verwendeten Bezugszeichen und kennzeichnen die entsprechenden Größen. Dargestellt sind von oben nach unten der zeitliche Verlauf des Ausgangssignals U, der zeitliche Verlauf des ersten Signals U1, welches auf dem ersten Kanal K1 liegt, und der zeitliche Verlauf des zweiten Signals U2, welches auf dem zweiten Kanal K2 anliegt.

In dem dargestellten Fall findet zu Beginn eines Flankenwechsels des Ausgangssignals U von 0 auf 1 eine Unterbrechungsprüfung des zweiten Kanals K2 statt. Zu Beginn der Flanke, bei der das Ausgangssignal U auf logisch "1" springt, verbleibt das erste Signal zunächst auf logisch "0" während das zweite Signal auf logisch "1" springt und somit den Wert des Ausgangssignals U bestimmt. Erst nach Ablauf eines ersten Zeitfensters T1 springt schließlich auch das erste Signal U1 auf logisch "1".

Innerhalb des ersten Zeitfensters T1 ist sichergestellt, dass der zweite Kanal K2 Strom führt, da der erste Kanal K1 auf logisch "0" steht und somit sicher stromlos ist. Somit kann in diesem Zeitfenster eine Unterbrechungsprüfung des zweiten Kanals K2 zuverlässig durchgeführt werden. Nach Ablauf des ersten Zeitfensters T1 werden beide Kanäle auf logisch "1" gesetzt, so dass eine redundante Bereitstellung des Ausgangssignals U vorliegt. Nach einiger Zeit wird schließlich das zweite Signal U2 auf logisch "0" geschaltet, so dass der zweite Kanal K2 sicher stromlos ist. Innerhalb des zweiten Zeitfensters T2 wird eine Unterbrechungsprüfung des ersten Kanals K1 durchgeführt. Erst nach Ablauf des zweiten Zeitfensters T2 wird schließlich auch wieder das zweite Signal auf logisch "1" geschaltet, so dass eine redundante Bereitstellung des Ausgangssignals U vorliegt.

Das erste und zweite Zeitfenster T1,T2 sind möglichst klein zu wählen, da in der Zeit, innerhalb der die Unterbrechungsprüfung durchgeführt wird, das Ausgangssignal U nur von einem Kanal zur Verfügung gestellt wird. Somit stellen die Zeitfenster eine Lücke dar, innerhalb der bei Ausfall des zu prüfenden Kanals keine stoßfreie Bereitstellung des Ausgangssignals durch den anderen Kanal erfolgen kann.

FIG 4 zeigt Signalverläufe einer zweiten Ausführungsform eines Verfahrens zur Durchführung einer Unterbrechungsprüfung. Auch hier entsprechen die Bezugszeichen den bereits unter FIG 2 und FIG 3 verwendeten Bezugszeichen.

In dem dargestellten Fall springen bei einem Flankenwechsel des Ausgangssignals U von 0 auf 1, sowohl das erste Signal U1 als auch das zweite Signal U2 auf logisch "1". Eine Unterbrechungsprüfung findet zunächst nicht statt. Erst nach einer gewissen Zeit wird das erste Signal U1 auf logisch "0" umgeschaltet und für die Dauer eines ersten Zeitfensters T1 in diesem Zustand gehalten. Innerhalb dieses ersten Zeitfensters T1 ist nun wiederum sichergestellt, dass der erste Kanal K1 stromlos ist und der zweite Kanal K2 Strom führt, so dass eine zuverlässige Unterbrechungsprüfung des zweiten Kanals K2 durchgeführt werden kann. Nach Ablauf des ersten Zeitfensters T1 wird das erste Signal U1 wieder auf logisch "1" geschaltet.

Nach einer gewissen Zeit wird schließlich das zweite Signal U2 auf logisch "0" geschaltet, um den zweiten Kanal K2 stromlos zu schalten. Innerhalb eines zweiten Signalfensters T2 kann eine zuverlässige Unterbrechungsprüfung des ersten Kanals K1 durchgeführt werden. Nach Ablauf des zweiten Zeitfensters T2 wird schließlich auch das zweite Signal U2 auf logisch "1" geschaltet, so dass eine redundante Bereitstellung des Ausgangssignals U wieder existiert.

FIG 5 zeigt eine Ausführungsform eines Automatisierungsgerätes 3 mit einer Verarbeitungseinheit 2 zur Durchführung einer Unterbrechungsprüfung. Die Verarbeitungseinheit 1 stellt beispielsweise eine CPU des Automatisierungsgerätes 3 dar, wobei das Automatisierungsgerät 3 insbesondere eine speicherprogrammierbare Steuerung ist, wie sie üblicherweise in der Automatisierungstechnik verwendet wird.

Mit Hilfe der Speicherprogrammierbaren Steuerung 3 wird ein Anwendungsprogramm durchgeführt, in dem Sollzustände für einen Aktor 4 festgelegt werden. Der Aktor 4 benötigt derartige Sollvorgaben in Form eines digitalen Ausgangssignals U. Das digitale Ausgangssignal U wird von zwei redundanten digitalen Ausgabebaugruppen B1,B2 zur Verfügung gestellt, wobei ein erster Kanal K1 der ersten Baugruppe B1 parallel zu einem zweiten Kanal K2 der zweiten Baugruppe B2 geschaltet ist. Jede Ausgabebaugruppe umfasst in diesem Beispiel acht digitale Augabekanäle, wobei hier beispielhaft nur die Parallelschaltung des ersten Kanals K1 der ersten Baugruppe B1 und des zweiten Kanals K2 der zweiten Baugruppe B2 gezeigt ist.

Beide Kanäle K1,K2 verfügen über jeweils eine integrierte Diode D1,D2, durch die eine Entkopplung der Kanäle K1,K2 bewirkt wird. Um eine Unterbrechungsprüfung an den Kanälen K1,K2 durchzuführen, gibt ein auf der Verarbeitungseinheit 1 laufender Treiber 2 einen Wert für einen der Kanäle K1,K2 vor, der diesen gezielt stromlos schaltet. Sobald der stromlose Zustand von einem der Kanäle K1,K2 erreicht ist, kann der andere Kanal auf eine mögliche Unterbrechung hin untersucht werden. Hierbei kommt das bereits unter FIG 3 und FIG 4 beschriebene Verfahren zum Einsatz.

Die vorliegende Erfindung soll nicht auf die hier exemplarisch gezeigten Ausführungsformen beschränkt sein. Vielmehr sind weitere Ausführungsformen denkbar und von der Erfindung umfasst, solange der Grundgedanke, dass eine Unterbrechungsprüfung eines der parallel geschalteten Kanäle K1,K2 durchgeführt ist, während der andere Kanal in einen stromlosen Zustand gezwungen wird, erhalten bleibt. Insbesondere ist das beschriebene Verfahren zur Unterbrechungsprüfung auch bei parallel geschalteten Analogausgabebaugruppen möglich. Bei einer derartigen Ausführung ist jedoch eine sehr viel komplexere Entkopplungsschaltung der parallelen Kanäle notwendig als die bloße Integration einer Diode in jedem Kanal.

Zusammenfassend betrifft die Erfindung eine Vorrichtung und ein Verfahren zur Drahtbruchprüfung bei einer redundanten Ausgabe eines Signals. Um eine möglichst ausfallsichere Ausgabe insbesondere eines digitalen Signals bei gleichzeitiger Bereitstellung einer Diagnosefunktion zu gewährleisten, wird vorgeschlagen, zwei Digitalausgabebaugruppen insbesondere mit in jedem Kanal integrierter Diode parallel zu schalten. Die Diagnosefunktion wird durch einen Treiber ermöglicht, der bei einem Sollwert für das digitale Signal von logisch "1", den Kanal mit einer logischen "1" beschaltet, während er einen hierzu parallel geschalteten Kanal kurzfristig auf logisch "0" setzt und zeitgleich eine Unterbrechungsprüfung des mit logisch "1" beschalteten Kanals durchführt.

## Patentansprüche

1. Verarbeitungseinrichtung (1) zur Durchführung einer Unterbrechungsprüfung für mindestens einen ersten und einen zweiten Kanal (K1,K2) zur Bereitstellung elektrischer Signale (U1,U2), wobei der zweite Kanal (K2) zu dem ersten redundant und parallel geschaltet ist und wobei die Verarbeitungseinrichtung (1) einen Treiber (2) zur Vorgabe der Signale (U1,U2) aufweist,
**dadurch gekennzeichnet,**
**dass** der Treiber (2) zur kurzeitigen Vorgabe eines ersten Signals (U1) für den ersten Kanal (K1) vorgesehen ist, durch das der erste Kanal (K1) gezielt in einen stromlosen Zustand versetzt wird, und die Verarbeitungseinrichtung (1) zur Durchführung der Unterbrechungsprüfung des zweiten Kanals (K2) während des stromlosen Zustandes des ersten Kanals (K1) vorgesehen ist.

2. Verarbeitungseinrichtung (1) nach Anspruch 1,
wobei der Treiber (2) zur Vorgabe digitaler Logiksignale vorgesehen ist.

3. Verarbeitungseinrichtung (1) nach einem der Ansprüche 1 oder 2,
wobei die Verarbeitungseinheit (1) zur Durchführung der Unterbrechungsprüfung vorgesehen ist, während ein am Ausgang der parallel geschalteten Kanäle (K1,K2) anliegendes Ausgangssignal (U) von einem Anwendungsprogramm auf logisch "1" gesetzt ist.

4. Verarbeitungseinrichtung (1) nach einem der vorhergehenden Ansprüche,
wobei der erste und zweite Kanal (K1,K2) jeweils mindestens ein elektrisches Ventil, insbesondere eine Diode (D1,D2), aufweisen, die zur Entkopplung der Kanäle (K1,K2) vorgesehen sind.

5. Verarbeitungseinrichtung (1) nach einem der vorhergehenden Ansprüche,
wobei der Treiber (2) zur Generierung des ersten Signals (U1) durch Inversion eines zweiten Signals (U1) für den zweiten Kanal (K2) während der Unterbrechungsprüfung vorgesehen ist.

6. Verarbeitungseinrichtung (1) nach einem der vorhergehenden Ansprüche,
wobei die Verarbeitungseinheit (2) zur Unterbrechungsprüfung des zweiten Kanals (K1,K2) zu Beginn einer Flanke vorgesehen ist, in der das Ausgangssignal (U) vom Anwendungsprogramm auf logisch "1" gesetzt ist.

7. Verarbeitungseinrichtung (1) nach einem der vorhergehenden Ansprüche,
wobei die Verarbeitungseinheit (2) zur Unterbrechungsprüfung des zweiten Kanals (K1,K2) vorgesehen ist, nachdem das Ausgangssignal (U) vom Anwendungsprogramm und das erste und zweite Signal (U1,U2) vom Treiber (2) auf logisch "1" gesetzt sind.

8. Verarbeitungseinrichtung (1) nach einem der vorhergehenden Ansprüche,
wobei die Verarbeitungseinrichtung (2) zur Unterbrechungsprüfung beider Kanäle (K1,K2) während eines Pulses vorgesehen ist, bei dem das Ausgangssignal (U) vom Anwendungsprogramm auf logisch "1" gesetzt ist.

9. Verarbeitungseinrichtung (1) nach einem der vorhergehenden Ansprüche,
wobei die Verarbeitungseinheit (1) Teil einer Speicherprogrammierbaren Steuerung ist.

10. Verarbeitungseinrichtung (1) nach einem der vorhergehenden Ansprüche,
wobei der Treiber (2) als Softwaretreiber ausgeführt ist, der Bestandteil des Anwendungsprogramms ist.

11. Verarbeitungseinrichtung (1) nach einem der vorhergehenden Ansprüche,
wobei der Treiber (2) als Softwaretreiber ausgeführt ist, der als Firmware in einem Speicherbereich der Verarbeitungseinheit (1) gespeichert ist.

12. Automatisierungsgerät (3) mit einer Verarbeitungseinrichtung (1) nach einem der Ansprüche 1 bis 11.

13. Automatisierungsgerät (3) nach Anspruch 12 mit einer ersten Baugruppe (B1), die den ersten Kanal (K1) aufweist, und einer zweiten Baugruppe (B2), die den zweiten Kanal (K2) aufweist.

14. Automatisierungsgerät (3) nach Anspruch 13,
wobei die erste Diode (D1) in der ersten Baugruppe (B1) und die zweite Diode (D2) in der zweiten Baugruppe (B2) integriert sind.

15. Verfahren zur Durchführung einer Unterbrechungsprüfung für mindestens einen ersten und einen zweiten Kanal (K1,K2) zur Bereitstellung elektrischer Signale (U1,U2), wobei der zweite Kanal (K2) zu dem ersten redundant und parallel geschaltet ist und wobei mit einem Treiber (2) die elektrischen
Signale (U1,U2) vorgegeben werden,
**dadurch gekennzeichnet,**
**dass** mit dem Treiber (2) kurzeitig ein erstes Signal (U1) für den ersten Kanal (K1) vorgegeben wird, durch das der erste Kanal (K1) gezielt in einen stromlosen Zustand versetzt wird, und mit einer Verarbeitungseinrichtung (1) die Unterbrechungsprüfung des zweiten Kanals (K2) während des stromlosen Zustandes des ersten Kanals (K1) durchgeführt wird.

16. Verfahren nach Anspruch 15,
wobei mit dem Treiber (2) digitale Logiksignale vorgegeben werden.

17. Verfahren nach einem der Ansprüche 15 oder 16,
wobei mit der Verarbeitungseinheit (1) die Unterbrechungsprüfung durchgeführt wird, während ein am Ausgang der parallel geschalteten Kanäle (K1,K2) anliegendes Ausgangssignal (U) von einem Anwendungsprogramm auf logisch "1" gesetzt ist.

18. Verfahren nach einem der Ansprüche 15 bis 17,
wobei die Kanäle (K1,K2) mit mindestens einem elektrischen Ventil, insbesondere einer Diode (D1,D2), im ersten und zweite Kanal (K1,K2) entkoppelt werden.

19. Verfahren nach einem der Ansprüche 15 bis 18,
wobei mit dem Treiber (2) das erste Signal (U1) durch Inversion eines zweiten Signals (U1) für den zweiten Kanal (K2) während der Unterbrechungsprüfung generiert wird.

20. Verfahren nach einem der Ansprüche 15 bis 19,
wobei mit der die Verarbeitungseinheit (2) die Unterbrechungsprüfung des zweiten Kanals (K1,K2) zu Beginn einer Flanke durchgeführt wird, in der das Ausgangssignal (U) vom Anwendungsprogramm auf logisch "1" gesetzt ist.

21. Verfahren nach einem der Ansprüche 15 bis 20,
wobei mit der Verarbeitungseinheit (2) die Unterbrechungsprüfung des zweiten Kanals (K1,K2) durchgeführt wird, nachdem das Ausgangssignal (U) vom Anwendungsprogramm und das erste und zweite Signal (U1,U2) vom Treiber (2) auf logisch "1" gesetzt sind.

22. Verfahren nach einem der Ansprüche 15 bis 21,
wobei die Verarbeitungseinrichtung (2) die Unterbrechungsprüfung beider Kanäle (K1,K2) während eines Pulses durchführt, bei dem das Ausgangssignal (U) vom Anwendungsprogramm auf logisch "1" gesetzt ist.

23. Verfahren nach einem der Ansprüche 15 bis 22,
wobei ein Softwaretreiber als Treiber (2) verwendet wird, der Bestandteil des Anwendungsprogramms ist.

24. Verfahren nach einem der Ansprüche 15 bis 23,
wobei ein Softwaretreiber als Treiber (2) verwendet wird, der als Firmware in einem Speicherbereich der Verarbeitungseinheit (1) gespeichert ist.
